# EUROPÄISCHE PATENTSCHRIFT

(11) **EP 1 797 463 B1**
(45) Veröffentlichungstag und Bekanntmachung des Hinweises auf die Patenterteilung: **01.03.2017**
(21) Anmeldenummer: 05767923.5
(22) Anmeldetag: 25.07.2005
(51) Int. Cl.: G01N 27/90, G01V 3/10

(54) **VORRICHTUNG ZUR ORTUNG METALLISCHER OBJEKTE SOWIE VERFAHREN ZUM ABGLEICH EINER SOLCHEN VORRICHTUNG**
DEVICE FOR LOCATING METALLIC OBJECTS AND METHOD FOR ADJUSTING SUCH A DEVICE
DISPOSITIF POUR LA LOCALISATION D'OBJETS METALLIQUES ET PROCEDE D'AJUSTEMENT DUDIT DISPOSITIF

(30) Priorität: 29.09.2004 DE 102004047188
(43) Veröffentlichungstag der Anmeldung: 20.06.2007
(73) Patentinhaber: ROBERT BOSCH GMBH, 70442 Stuttgart (DE)
(72) Erfinder: HAASE, Bjoern, 70182 Stuttgart (DE)
(86) Internationale Anmeldenummer: PCT/EP2005/053614
(87) Internationale Veröffentlichungsnummer: WO 2006/034900

(56) Entgegenhaltungen:
- DE-A1- 10 122 741
- DE-C1- 19 850 749
- GB-A- 117 507
- US-A- 5 065 099
- PATENT ABSTRACTS OF JAPAN Bd. 007, Nr. 035 (P-175), 10. Februar 1983 (1983-02-10) -& JP 57 187650 A (ANRITSU DENKI KK), 18. November 1982 (1982-11-18)

## Beschreibung

Die vorliegende Erfindung betrifft eine Vorrichtung zur Ortung metallischer Objekte nach dem Oberbegriff des Anspruchs 1 sowie ein Verfahren zum Abgleich einer solchen Vorrichtung.

### Stand der Technik

Detektoren zur Ortung von in Bauwerkstoffen verborgenen, metallischen Objekten arbeiten derzeit in der Regel mit induktiven Verfahren. Hierbei wird ausgenutzt, dass sowohl leitfähige als auch ferromagnetische Werkstoffe die Eigenschaften einer in der Umgebung angebrachten, elektromagnetischen Spule beeinflussen. Die von metallischen Gegenständen hervorgerufenen Veränderungen der induktiven Eigenschaften werden von einer Empfangsschaltung eines solchen Detektors registriert. Auf diese Weise lassen sich beispielsweise in einer Wand eingeschlossene, metallische Gegenstände mittels einer oder mehrerer über die Wand hinweg geführter Spulen orten.

Eine technische Schwierigkeit bei der Detektion metallischer Objekte besteht darin, dass die Rückwirkung der zu ortenden Gegenstände auf die Spule bzw. Spulen der Detektoranordnung betraglich sehr klein ist. Dies trifft vor allem für den Einfluss von nicht ferromagnetischen Objekten, wie beispielsweise dem technisch wichtigen Kupfer, zu. Dies führt dazu, dass die induktive Wirkung der Spulen untereinander deutlich größer sein kann, als die durch einen eingeschlossenen Gegenstand erzeugt Induktion in der Empfangsspule.

Die auf einem induktiven Verfahren basierenden Detektoren haben daher in der Regel einen hohen Offset, d. h. ein hohes an der Empfangsspule des Detektors abgreifbares Signal, welches bereits ohne Einfluss eines externen, metallischen Gegenstands von der Empfangsschaltung des Detektors gemessen wird. Ein solcher hoher Offset macht es schwierig, sehr kleine induktive Änderungen, welche durch einen in die Nähe des Detektors gebrachten metallischen Gegenstand verursacht werden, zu detektieren. Aus dem Stand der Technik sind Sensoranordnungen für induktive Sensoren bzw. Detektoren bekannt, die eine Kompensation des durch die Spulen selbst induzierten Signals ermöglichen.

Die Notwendigkeit eine sehr kleine Änderung der Induktivität auf einem sehr großen Offset-Signal zu detektieren, setzt darüber hinaus den Einsatz eng tolerierter und damit teuerer Bauelemente voraus und erfordert zudem eine sehr rauscharme Analogelektronik, die die Kosten für ein solches Ortungsgerät deutlich erhöht. Nicht eingehaltene Montage- oder Fertigungstoleranzen sowie ein Driften einzelner Komponenten gegeneinander führen so unweigerlich zu einer Verfälschung des Messergebnisses einer solchen Vorrichtung.

Um dieser Offsetproblematik zu begegnen, sind im Stand der Technik verschiedene Ansätze bekannt, welche alle gemeinsam zum Ziel haben, das Sensorsignal welches bei Abwesenheit metallischer Objekte vorhanden ist zu reduzieren und somit die relativen Signaländerungen zu vergrößern.

Oft wird dabei ein mehrstufiger Ansatz gewählt, wobei z.B. in einem ersten Schritt eine Anordnung von Sensorspulen verwendet wird, welche in der Lage ist, den Signaloffset im Idealfall bereits vollständig zu beseitigen, bzw. zu kompensieren. Die in der Praxis erreichbare Kompensationsgüte hängt jedoch vielfach z.B. von Fertigungstoleranzen ab, so dass eine vollständige Beseitigung des Signaloffsets vielfach ein weiteres Verfahren, gewissermaßen zur Feinkompensation erforderlich macht.

Die bekannten Verfahren zur Kompensation von Fertigungs- bzw. Montagetoleranzen für induktive Sensoren in Kompensationsanordnung basieren im wesentlichen darauf, dass die im Detektorsystem induzierten Fehlerspannungen dadurch kompensiert werden, dass entweder die Geometrie des Erregermagnetfelds durch einen Abgleichprozess korrigiert wird, oder ein Korrekturspannungssignal erzeugt wird. Ein Beispiel für das erstgenannte Kompensationsverfahren liefert dabei die EP 1092989, ein Beispiel für das zweite Kompensationsverfahren ist durch die US 5,729,143 gegeben.

Aus der US 5,729,143 ist ein Detektor bekannt, dessen Ziel es ist, den zuvor angesprochenen Offset des Messsignals möglichst weitgehend zu unterdrücken. Zu diesem Zweck weist der Detektor der US 5,729,143 eine Sendespule mit einem Sender, sowie eine Empfangsspule mit einem Empfänger auf. Die Sendespule und die Empfangsspule des Detektors sind in der Weise miteinander induktiv gekoppelt, dass sie sich teilweise gegenseitig überlappen. Die Sendespule wird vom Sender mit einem Wechselstrom gespeist. Diese stromdurchflossene Sendespule erregt durch ihre induktive Kopplung mit der Empfangsspule in dieser einen ersten Teilfluss in der Überlappungsfläche der beiden Spulen und einen zweiten Teilfluss in der restlichen Fläche der Empfangsspule. Der Abstand zwischen den Zentren von Sendespule und Empfangsspule kann nun so gewählt werden, dass sich die beiden Teilflüsse, welche ein entgegengesetztes Vorzeichen haben, gegenseitig kompensieren. Ist dies der Fall, so induziert die stromdurchflossene Sendespule - wenn kein externer, metallischer Gegenstand in der Nähe der Spulenanordnung vorhanden ist - keinen Strom in der Empfangsspule, so dass der Empfänger in diesem Idealfall auch kein Offset-Signal messen würde. Erst wenn die Spulenanordnung in die Nähe eines metallischen Gegenstands gebracht wird, werden die von der Sendespule erzeugten Feldlinien gestört, so dass nun in der Empfangsspule ein nicht verschwindender Fluss angeregt wird, der ein Messsignal in der Empfangsspule erzeugt, welches unbeeinflusst von einem Offset-Signal ist und vom Empfänger ausgewertet werden kann.

Dabei ist der relative Abstand der Zentren von Sendespule und Empfangsspule ein äußerst kritischer Parameter, so dass sich die idealer Weise anzunehmende Abwesenheit einer induzierten Spannung in der Empfängerspule in der Praxis nur mit großem Aufwand realisieren lässt. Es hat sich gezeigt, dass eine hinreichende Kompensation der Flusskomponenten in der Praxis einer Serienfertigung nicht realisiert werden kann.

Aus diesem Grund schlägt die US 5,729,143 eine elektronische Schaltung vor, welche die Kompensation auf elektronischem Weg nachträglich erreicht und den Sensor somit auch praktisch nutzbar macht. Das in der US 5,729,143 beschriebene Verfahren arbeitet monofrequent. Erregerseitig wird ein magnetisches Wechselfeld einer bestimmten Frequenz f generiert und die induzierten Spannungskomponenten in den Detektorwindungen mit geeigneten, analogen und digitalen Filtern frequenzselektiv bei eben dieser Frequenz f ausgewertet werden. Die durch die magnetische Fehlkompensation von Detektor- und Erregersystem in den Detektorwindungen induzierte Spannung U(f) bei der Frequenz f verfügt über eine temperaturabhängige Amplitude und Phasenlage, die zudem zusätzlichen Exemplarstreuungen unterworfen ist. Das Verfahren der US 5,729,143 beruht nun darauf, analog zu der in den Detektorwindungen induzierten Spannungen eine Korrekturspannung hinzuzuaddieren, deren Amplitude und Phasenlage bei der Arbeitsfrequenz f die Fehlerspannung U(f) gerade kompensiert. Hierzu generiert ein Mikroprozessor bei der Frequenz f ein in Phase und Amplitude kontrolliertes digitales Korrektursignal. Die für die Kompensation erforderliche Amplitude und Phasenlage ist dabei von der Phasenverschiebung abhängig, welche durch die Bauelemente der Schaltungen im Erreger- und Detektorzweig hervorgerufen werden. Das erforderliche Korrektursignal ist damit aber u. a. auch einer Temperaturdrift unterworfen. Um auch bei Veränderungen der Arbeitstemperatur die Fehlerspannung U(f) kompensieren zu können, muss der Mikroprozessor die Phasenlage und Amplitude des Korrektursignals über die Temperatur nachführen. Hierzu ist in der Regel eine Rekalibrierung durch den Anwender erforderlich.

Eine alternative Methode zur Kompensation einer magnetischen Fehlkompensation ist aus der EP 1092989 A1 bekannt. Bei dieser Methode wird, anstatt, dass zur Detektionsspannung, welche in den Detektorwindungen induziert wird, eine Korrekturspannung hinzuaddiert wird, mit Korrekturmagnetfeldern gearbeitet. Hierzu wird das System der Magnetfelderregung nicht nur durch die primäre Erregerspule gebildet, sondern es werden zusätzlich Trimm-Windungen und sogenannte Korrekturwindungen hinzugefügt. Der Unterschied zwischen Trimm- und Korrekturwindung ist dabei der, dass die Korrekturwindungen mit der primären Erregerspule in Reihe geschaltet sind und somit immer mit dem gleichen Strom durchflossen werden, während die sogenannten Trimm-Windungen mit einem justierbaren Bruchteil des in den Korrektur- und Erregerspulen fließenden Stroms beschickt werden können. Auf diese Art kann erreicht werden, dass sich bei Abwesenheit metallischer Objekte in der Umgebung des Sensors in den Detektorspulen keine induzierte Spannung ergibt. Das Verfahren der EP 1092989 A1 hängt dabei wesentlich weniger von Bauelementetoleranzen und Driften in den Sende- und Empfangsschaltungen ab. Darüber hinaus ist die Messung nicht auf eine ausgewählte Arbeitsfrequenz begrenzt, da die Kompensation weitgehend unabhängig von der verwendeten Frequenz ist. Der Aufbau eines Sensors gemäß der EP 1092989 A1 wird demgegenüber jedoch wesentlich komplexer. Während der Sensor der US 5,729,143 mit nur je einer Spule für den Sende- und Empfangskreis auskommt, benötigt der Aufbau der EP 1022989 A1 im Erregerpfad zehn Spulen sowie vier Spulen für den Detektorpfad.

Aus der DE 101 22 741 A1 ist ein Detektor zur Ortung metallischer Gegenstände bekannt, der eine Empfangsspule und eine erste Sendespule aufweist, die induktiv miteinander gekoppelt sind. Damit ein möglichst geringes Offset-Signal im Detektor entsteht, ist eine zweite Sendespule vorhanden, die ebenfalls mit der Empfangsspule induktiv gekoppelt ist. Die Empfangsspule und die beiden Sendespulen sind konzentrisch auf einer gemeinsamen Achse angeordnet, wobei die beiden Sendespulen bezüglich ihrer Windungszahlen und/oder ihrer Abmessungen so dimensioniert sind, dass sich die von den beiden Sendespulen in der Empfangsspule angeregten Flüsse gegenseitig kompensieren.

In der Regel ist bei den Geräten des Standes der Technik jedoch vor dem Start einer jeden Ortungsmessung eine Kalibrierung des Sensors erforderlich, bei welcher der Offset bei Abwesenheit externer, metallischer Objekte vermessen wird und anschließend die Abweichung von diesem Referenzwert als Indikator für die Anwesenheit metallischer Gegenstände gewertet wird. Dieser zeit-raubende Kalibrierungsprozess beinhaltet zudem ein großes Fehler- und Schadens-potential bei Fehlbedienung eines Anwenders.

Aus der GB 117 507 A ist eine Vorrichtung zur Lokalisierung von metallischen Objekten, wie beispielsweise Gewehrkugeln, in menschlichen oder tierischen Körpern bekannt, die ein induktives Messverfahren verwendet. Bei der Vorrichtung der GB 117 507 A sind im Detektorkopf sowohl eine Sende- als auch Empfangsspule angeordnet. Das System der GB 117 507 A benutzt einen angeglichenen Detektorkopf. Dazu besitzt die Vorrichtung Schaltmittel, die die Windungszahl einer Spule auf der Empfängerseite variieren können. Dies wird in der Vorrichtung der GB 117 507 A benötigt, falls ein anderer Detektorkopf eingesetzt werden soll, da sich dann die Leitungslängen im induktiven Gesamtsystem gegebenenfalls ändern.

Die US 5, 065, 099 A offenbart eine Spulenarrayanordnung zur hoch empfindlichen Bohrlochvermessung, welche eine Mehrzahl von Sendespulen und eine Mehrzahl von Empfangsspulen aufweist. Durch Variation der Spulenabstände können vertikale und radiale Messempfindlichkeiten des Systems angepasst werden. Dazu weist die Vorrichtung der US 5, 065, 099 A zudem auch Abschirmspulen auf, um die Empfängerspulen gegenüber Signalen der Sendespulen abzuschirmen.

Im Patent Abstracts of Japan, Band 007, Nr. 035 (P 175) ist ein hochempfindlicher Metalldetektor mit zwei Sendespule und einer Mehrzahl von Empfangsspulen beschrieben, der durch mehrfache Frequezteilung der verwendeten Messsignale es ermöglicht, Aussagen über das detektierte Messobjekt und insbesondere auch Aussagen über Eigenschaften des detektierten Messobjektes, wie beispielsweise die Art des Metall des Messobjektes, zu treffen.

Der Erfindung liegt die Aufgabe zugrunde, ausgehend von den Detektoren des Standes der Technik, einen Detektor der eingangs genannten Art anzugeben, welcher ein möglichst geringes Offset-Signal erzeugt, wobei eine Fehlplatzierung der Spulen einen möglichst geringen Einfluss auf den Offset hat.

Darüber hinaus ist es Aufgabe der vorliegenden Erfindung, ein Verfahren für einen solchen Detektor zu realisieren, das eine preisgünstige und möglichst exakte Kompensation von Fertigungs- und Montagetoleranzen ermöglicht.

Die der Erfindung zugrundeliegende Aufgabe wird gelöst durch einen Detektor zur Ortung metallischer Objekte mit den Merkmalen des Anspruchs 1, bzw. durch ein Verfahren zum Betreiben eines solchen Detekors nach Anspruch 15.

### Vorteile der Erfindung

Die erfindungsgemäße Vorrichtung zur Ortung metallischer Objekte weist mindestens eine Sendespule und zumindest ein Empfangswindungssystem auf, die induktiv miteinander gekoppelt sind. Die erfindungsgemäße Anordnung weist darüber hinaus auch Schaltmittel auf, die es ermöglichen, die effektive Windungszahl des Empfangswindungssystems zu variieren.

Bei der erfindungsgemäßen Detektorvorrichtung wird im Gegensatz zu den Verfahren des Stands der Technik die Geometrie des Empfangswindungssystems, beispielsweise der Empfängerspulen derart modifiziert, dass der resultierende magnetische Gesamtfluss durch die Empfangswindungen verschwindet, falls kein zu ortendes Objekt in der Nähe der Vorrichtung lokalisiert ist.

Das Prinzip beruht darauf, dass die ursprünglichen Empfangswindungen durch eine oder mehrere zusätzliche Leiterschleifen ergänzt bzw. um diese reduziert werden. Zur Durchführung dieser Variation der Windungszahl der Empfangswindungen sind geeignete Schaltmittel vorgesehen, die in entsprechenden Abgleichprozessen induktive Kompensationsmodule in Form von Leiterschleifen bzw. Bruchteilen solcher Leiterschleifen dazu- oder wegschalten können. Bei einem geeigneten Design der Leiterschleifen der Empfangswindungen, also beispielsweise der einen oder mehreren Empfangsspulen, werden in diesen Leiterschleifenanteilen Spannungen induziert, welche die Fehlspannungen im Detektor, welche beispielsweise aufgrund von nicht eingehaltenen Fertigungstoleranzen entstehen, gerade kompensieren.

Im Vergleich mit Abgleichverfahren, welche auf der Erregerseite des Detektors arbeiten, ist die beanspruchte, schaltungstechnische Realisierung auf der Empfangsseite wesentlich einfacher und preisgünstiger, da beispielsweise vergleichsweise hochohmige Schaltmittel eingesetzt werden können, da in den Empfangsspulen im Vergleich zu den Erregerspulen nur sehr geringe Ströme fließen.

Die erfindungsgemäße Vorrichtung ermöglicht in vorteilhafter Weise ein Verfahren zum Abgleich eines induktiven Messgerätes, insbesondere zum Betreiben eines Ortungsgerätes, bei dem der Abgleich einer in den Empfangswindungen induzierten Spannung U durch Zuschaltung eines Abgleichwindungssystems zu den Windungen der Empfangswindungssystems erfolgt. Das Abgleichwindungssystem kann dabei in vorteilhafter Weise aus einem oder mehreren Kompensationsmodulen vorgegebener Windungslänge bestehen.

Auf diese Weise kann ein Messgerät mit der erfindungsgemäßen Vorrichtung beispielsweise werksseitig nach der Montage abgeglichen werden, so dass ein optimierter Betrieb möglich ist.

Zusätzlich oder alternativ zum werksseitigen Abgleich kann ein solches Abgleichverfahren auch in einem Kalibrierungsprozess, der regelmäßig automatisch durchgeführt wird, oder aber auch durch einen Nutzer eines entsprechenden Messgerätes manuell gestartet wird durchgeführt werden. Dazu kann ein Messgerät in vorteilhafter Weise einen Programmcode aufweisen, der in einem entsprechenden Speichermedium des Messgerätes abgelegt ist, und das erfindungsgemäße Verfahren steuert.

Vorteilhafte Weiterbildungen des in Anspruch 1 angegebenen Detektors bzw. des erfindungsgemäßen Abgleichverfahrens ergeben sich mit den Merkmalen der abhängigen Ansprüche.

In vorteilhafter Weise sind die Kompensationsmodule, d.h. die jeweils zwischen Schaltbrücken entstehenden, stromdurchflossenen Bogenlängen der Abgleichs- oder Ausgleichswindungen, derart ausgestaltet, dass bei dem erfindungsgemäßen Abgleich zwischen m verschiedenen Alternativkonfigurationen der elektrischen Kontaktierung umgeschaltet werden kann. Auf diese Weise ist es möglich, einen beispielsweise durch Fehlmontage oder nicht eingehaltene Fertigungstoleranzen erzeugten Offset des Detektorsystems zu kompensieren, in dem verschiedene Kombinationen von Verschaltungen durchgeschaltet werden, bis sich ein optimaler Abgleich ergibt.

Dabei besteht das Abgleichswindungssystem in vorteilhaften Ausführungsformen zumindest aus n unabhängigen Kompensationsmodulen KMₙ mit jeweils m(n) unterschiedlichen Konfigurationen. In diesen Konfigurationen wird durch selektives, beispielsweise schrittweises Umschalten zwischen den Einzelkonfigurationen m eines Kompensationsmoduls KMₙ eine Spannungsänderung ΔU_{n,m} im Empfangszweig des Kompensationssensors induziert, die dem Abgleich des Sensors dient. Die Spannungsänderung ΔU_{n,m} im Empfangszweig, die sich durch das Kompensationsmoduls KMₙ ergibt, unterscheidet sich dabei jeweils um einen festen Faktor von der Spannungsdifferenz ΔU_{n-1,m} des Kompensationsmoduls KMₙ₋₁ mit einer um eins geringeren Ordnungszahl n. Besonders vorteilhaft ist dabei ein System mit einem Faktor 2, d.h. dass für die Kompensationsmodule KMₙ des Abgleichwindungssystems eine Binärkodierung verwendet wird, so dass die Beziehung ΔU = (U(n,1)-U(n,2)) = 2*(U(n-1,1) -U(n -1,2)) gilt. Eine solche spezielle Ausgestaltung der Windungslängen der einzelnen Kompensationsmodule führt zu einer optimierten, d.h. minimalen Anzahl der notwendigen Schaltmittel.

In vorteilhafter Weise sind die Schaltmittel für das Abgleichswindungssystem, d.h. die Schaltmittel zur Variation der effektiven Windungszahl des Empfangswindungssystems zwischen den Windungen einer ersten Empfangsspule und den Windungen mindestens einer weiteren Empfangsspule angeordnet.

In einer speziellen Ausführungsform des erfindungsgemäßen Detektors sind die Schaltmittel als Lötbrücken zwischen Windungen des Empfangswindungssystems ausgeführt.

In alternativen Ausführungsformen können die Schaltmittel auch derart angeordnet sein, dass sich Schaltbrücken zwischen Empfangsspulenwindungen mit unterschiedlichem Radius Rₐ bzw. R_{b} ergeben.

In einer besonders vorteilhaften Ausführungsform des erfindungsgemäßen Detektors sind die Schaltmittel durch Halbleiterbauelemente, beispielsweise Transistoren, insbesondere durch Feldeffekttransistoren realisiert.

In einer vorteilhaften Ausführungsform des erfindungsgemäßen Detektors sind zwei Empfangsspulen des Empfangswindungssystems in einer Ebene angeordnet. Dabei können die Spulen insbesondere in einer planaren, einlagigen Wickelgeometrie ausgebildet sein, um in vorteilhafter Weise den Kapazitätsbelag der beiden Empfangsspulen auf einfache Weise zu reduzieren.

Bei Verwendung einer planaren Geometrie des Empfangswindungssystem ist es insbesondere möglich, das Empfangswindungssystem, also beispielsweise zwei Empfangsspulen in vorteilhafter Weise als Printspulen auf der Leiterplatte einer gedruckten Schaltung zu realisieren, so dass in diesem Fall keine zusätzlichen Kosten für die Fertigung der Empfangswindungen anfallen.

Darüber hinaus können in dieser vorteilhaften Ausgestaltung auch die Schaltmittel, welche beispielsweise als Halbleiterbauelemente ausgebildet sind, in entsprechender Weise direkt als entsprechende Struktur der Leiterplatte realisiert werden. So können beispielsweise auf der Leiterplatte mehrere Transistoren, insbesondere Feldeffekttransistoren vorgesehen sein, welche die Kontaktierung der Spulenwindungen der beiden Empfangsspulen vornehmen. Durch ein Umschalten der einzelnen Halbleiterschalter können somit Kompensationsmodule, hinzu- oder abgeschaltet werden, so dass die effektiven Windungszahlen des Empfangswindungssystems variiert werden. Die Halbleiterschaltelemente werden über entsprechende Steuersignale leitend oder sperrend geschaltet.

In einer vorteilhaften Ausführungsform sind mehrere Empfangsspulen koaxial zueinander angeordnet und werden in unterschiedlicher Richtung bestromt. Die mindestens eine Sendespule kann dabei in einer - zumindest zu einer Empfangsspule - parallelen, aber höhenversetzten Ebene angeordnet sein.

In einer vorteilhafte Weise kann die mindestens eine Sendespule auf einem Wickelkörper aufgebracht sein, der auf der Leiterplatte, auf der die Empfangswindungen ausgebildet sind, befestigt ist. Der Wickelkörper der Sendespule dient dabei in dieser vorteilhaften Ausgestaltung als Abstandshalter der Sendespule über der Ebene der Empfangswindungen.

Die erfindungsgemäße Ausgestaltung einer Detektorvorrichtung zur Ortung metallischer Objekte, die die Kompensation von Fertigungs- und Montagetoleranzen für den induktiven Sensor ermöglicht, hat den Vorteil, frequenzunabhängig zu arbeiten. Die über geeignete Schaltmittel hinzugefügten Leiterschleifen im Empfangspfad können sehr preisgünstig hergestellt werden, insbesondere wenn hierfür Leiterstrukturen auf einer Platine genutzt werden. Im Vergleich mit Abgleichverfahren, welche auf der Erregerseite arbeiten, ist die schaltungstechnische Realisierung auf der Empfangsseite wesentlich einfacher und preisgünstiger, da beispielsweise vergleichsweise hochohmige Schaltmittel eingesetzt werden können, da in dem Empfangswindungssystem im Vergleich zu den Erregerspulen nur sehr geringe Ströme fließen.

Darüber hinaus ist der beschriebene Abgleich über die Variation der effektiven Windungszahlen des Empfangswindungssystems, also beispielsweise der Empfangsspulen, praktisch frei von einer Temperaturdrift, da seine Funktion nur von der Geometrie des Magnetfelds abhängt. Somit ist ein Abgleich über einen weiten Temperaturbereich hinweg möglich, der wenig von Bauelementetoleranzen und Drifteffekten abhängt.

Der erfindungsgemäße Detektor ermöglicht vorteilhafterweise eine Kompensation von Fertigungs- und Montagetoleranzen für induktive Sensoren in Kompensationsanordnung, die im wesentlichen ohne manuelle Abgleichmaßnahmen in der Fertigung auskommt und somit preisgünstig realisiert werden kann.

Vorteilhafterweise lässt sich eine solche Detektorvorrichtung in einem induktiven Messgerät, beispielsweise einem Ortungsgerät zur Detektion von metallischen Objekten in Wänden, Decken und Böden, nutzen.

Darüber hinaus lässt sich eine solche Detektorvorrichtung in oder an einer Werkzeugmaschine, beispielsweise einem Bohrwerkzeug integrieren, um dem Anwender dieser Maschine ein sicheres Bohren zu ermöglichen. So kann der Sensor beispielsweise in einem Bohr- oder Meißelwerkzeug integriert werden oder als ein mit einem solchen Werkzeug verbindbares Modul ausgebildet sein. Als ein möglicher Einbauort für den erfindungsgemäßen Sensor bietet sich in vorteilhafter Weise auch eine Absaugevorrichtung für Staub an, die mit der Werkzeugmaschine verbunden ist, oder mit dieser verbindbar ist, und funktionsbedingt in der Nähe einer zu bearbeitenden Wand zum Einsatz kommt.

Weitere Vorteile des erfindungsgemäßen Detektors ergeben sich aus der nachfolgenden Beschreibung eines Ausführungsbeispiels.

### Zeichnung

In der Zeichnung ist ein Ausführungsbeispiel eines erfindungsgemäßen Detektors dargestellt, das in der nachfolgenden Beschreibung näher erläutert werden soll. Die Figuren der Zeichnung, deren Beschreibung sowie die auf den Gegenstand gerichtete Ansprüche enthalten zahlreiche Merkmale in Kombination. Ein Fachmann wird diese Merkmale auch einzeln betrachten und zu weiteren, sinnvollen Kombinationen zusammenfassen, die somit als ebenfalls in der Beschreibung offenbart anzusehen sind.

Es zeigen:
Fig. 1 den prinzipiellen Aufbau einer Sensorgeometrie eines Detektors zur Ortung metallischer Objekte nach dem Stand der Technik in einer schematisierten Darstellung,
Fig. 2 ein erstes Ausführungsbeispiel der Spulenanordnung des erfindungsgemäßen Detektors in einer vereinfachten perspektivischen Darstellung,
Fig. 3 eine Aufsicht auf die Empfangsspulen des Detektors mit zugehörigen Schaltmitteln in einer vereinfachten, schematisierten Darstellung
Fig. 4 eine Aufsicht auf ein alternatives Ausführungsbeispiel der Empfangsspulen mit zugehörigen Schaltmitteln in einer vereinfachten, schematisierten Darstellung.

### Beschreibung der Ausführungsbeispiele

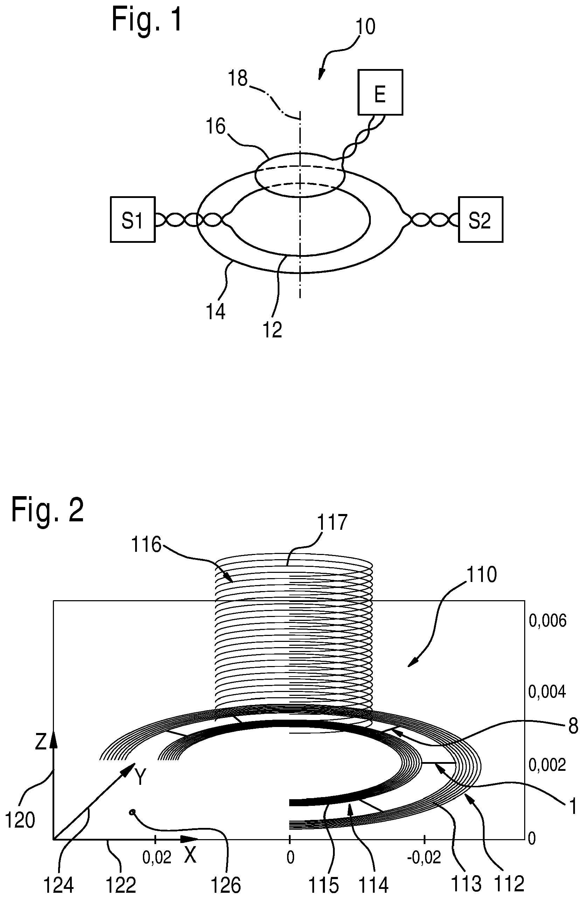

Fig. 1 zeigt den prinzipiellen Aufbau eines induktiven Kompensationssensors zur Ortung metallischer Gegenstände nach dem Stand der Technik. Ein solcher Detektor weist in seiner Sensorgeometrie 10 drei Spulen auf. Eine erste Sendespule 12, die an einen ersten Sender S1 angeschlossen ist, eine zweite Sendespule 14, die an einen zweiten Sender S2 angeschlossen ist, und eine Empfangsspule 16, die an einem Empfänger E angeschlossen ist. Jede Spule ist hier als kreisförmige Linie dargestellt. Die Besonderheit der Anordnung dieser drei Spulen 12, 14, 16 besteht darin, dass sie alle konzentrisch zu einer gemeinsamen Achse 18 angeordnet sind. Dabei haben die einzelnen Spulen 12, 14, 16 unterschiedliche Außenabmessungen, so dass die Spule 12 in die Spule 14 koaxial zur Achse 18 einsetzbar ist.

Die beiden Sendespulen 12 und 14 werden von ihren Sendern S1 und S2 mit Wechselströmen entgegengesetzter Phase gespeist. Damit induziert die erste Sendespule 12 in der Empfangsspule 16 einen Fluss, der dem von der zweiten Sendespule 14 in der Empfangsspule 16 induzierten Fluss entgegengesetzt gerichtet ist. Beide in der Empfangsspule 16 induzierten Flüsse kompensieren sich gegenseitig, so dass der Empfänger E kein Empfangssignal in der Empfangsspule 16 detektiert, falls sich kein externer, metallischer Gegenstand in der Nähe der Spulenanordnung 10 befindet. Der von den einzelnen Sendespulen 12 bzw. 14 in der Empfangsspule 16 erregte Fluss φ hängt von verschiedenen Größen ab, wie beispielsweise der Windungszahl und der Geometrie der Spulen 12 bzw. 14 und von den Amplituden der in die beiden Sendespulen 12 bzw. 14 eingespeisten Ströme sowie der gegenseitigen Phasenlage dieser Ströme.

Diese Größen sind bei den Detektoren des Standes der Technik letztendlich so zu optimieren, dass bei Abwesenheit eines metallischen Gegenstands in der Empfangsspule 16, bei stromdurchflossenen Sendespulen 12 bzw. 14 kein Fluss bzw. ein möglichst geringer Fluss φ angeregt wird. Bei der Spulenanordnung 10 gemäß Fig. 1 sind die erste Sendespule 12, die an den ersten Sender S1 angeschlossen ist und eine zweite Sendespule 14, die an einen zweiten Sender S1 angeschlossen ist koaxial zueinander in einer gemeinsamen Ebene angeordnet. Die Empfangsspule 16 ist in einer gegenüber den beiden Sendespulen 12 und 14 versetzten Ebene angeordnet.

Fig. 2 zeigt die Anordnung einer Sensorgeometrie 110, wie sie in einer erfmdungsgemäßen Vorrichtung zur Ortung metallischer Objekte zur Anwendung kommt. Die Sensorgeometrie 110 des Detektors gemäß Fig. 2 weist zwei Empfängerspulen 112 bzw. 114 auf, die in einer gemeinsamen Ebene 126 koaxial zueinander angeordnet sind und ein Empfangswindungssystem bilden. Mit einem gewissen Abstand z über dieser gemeinsamen Empfängerebene 126 des Empfangswindungssystems befindet sich eine Sendespule 116, die ebenfalls koaxial zu der Empfängerspule 112 bzw. der Empfängerspule 114 angeordnet ist. Diese Anordnung stellt somit ebenfalls einen induktiven Kompensationssensor dar.

Die Empfängerspulen 112 bzw. 114 des Empfangswindungssystems besitzen eine planare, einlagige Wickelgeometrie. Eine solche Ausbildung der Empfängerspulen 112, 114 eröffnet die Möglichkeit, den Kapazitätsbelag der beiden Empfängerspulen auf einfache Weise zu reduzieren. Hierbei ist es möglich, den Abstand von Windung von Windung groß und damit den parasitären Kapazitätsbelag der Spulenwicklung klein zu halten. Zur Isolation der einzelnen Kupferwindungen kann beispielsweise nicht, wie üblicherweise vorgsehen, ein Lack eingesetzt werden, sondern geeignete, andere und vor allem dickere Isolationsmittel. Als geeignet erscheinen vor allem Papier, Baumwolle und Isolationskunststoffe, wie sie bei Kabeln eingesetzt werden. Ein alternativer Ansatz zur Verringerung der parasitären Kapazität besteht in der Verwendung von Mehrkammer-Wicklungen für die Spulen 112 bzw. 114.

Bei Verwendung einer planaren Geometrie für das Empfangswindungssystem ist es insbesondere auch möglich, die beiden Empfängerspulen 112 bzw. 114 als Printspulen auf der Leiterplatte einer gedruckten Schaltung zu realisieren. In diesem Fall fallen keine wesentlichen Mehrkosten für die Fertigung der beiden Empfängerspulen an. Die Ausführung der beiden Empfängerspulen 112 bzw. 114 als Leiterbahnstrukturen auf einer Leiterplatte hat neben den verschwindenden Kosten zudem den Vorteil, dass in diesem Fall die Dimensionstoleranz der Windungen sehr gering ist. Es bereitet technisch keinerlei Probleme, Kupferstrukturen auf Leiterplatten bis auf 25 Mikrometer genau zu fertigen.

Fig. 2 zeigt einen solchen Aufbau in schematisierter Weise. Hierbei ist zur besseren Sichtbarkeit die Z-Achse 120 relativ zu den X- und Y-Achsen 122 bzw. 124 gedehnt. Zur Verdeutlichung dieser Darstellung befinden sich entsprechende Maßzahlen an den jeweiligen Achsen, die jedoch keine Absolutwerte, sondern lediglich die relative Größe der Skalierung der einzelnen Achsen in diesem Ausführungsbeispiel in beliebigen Einheiten vermitteln soll. Weiterhin wurde in Fig. 2 zur besseren Sichtbarkeit der Querschnitte jeweils ein Segment aus den Spulen ausgeschnitten.

In einer Ebene 126, die eine nicht weiter dargestellte Leiterplatte symbolisieren soll, und in Figur 2 von der X-Achse 122 und der Y-Achse 124 aufgespannt wird, liegen die beiden Detektorspulen 112 bzw. 114. Diese Ebene 126 kann dabei beispielsweise der Ober- oder der Unterseite der Leiterplatte entsprechen. Die Windungen 115 der Empfängerspule 114 sind dabei beispielsweise im Uhrzeigersinn gewickelt, während die weiter außen liegenden Windungen 113 der Empfängerspule 112 entgegen dem Uhrzeigersinn orientiert sind. Die in diesen Windungen 113, 115 induzierten Spannungen haben somit entgegengesetztes Vorzeichen und kompensieren sich bei geeigneter Dimensionierung im Falle der Abwesenheit externer metallischer Objekte vollständig.

Oberhalb der Ebene 126 der Leiterplatte, d.h. in Z-Richtung 120 versetzt, befindet sich eine Erreger- bzw. Sendespule 116. Besonders vorteilhaft ist es, wenn die Sendespule auf einem Wickelkörper gefertigt wird, der anschließend auf die Leiterplatte 126 aufgelötet wird. Die Wicklungen 117 der Sendespule 116 befinden sich somit in einer bestimmten, vordefinierten Höhe z oberhalb der Leiterplattenebene 126. Wegen der erforderlichen Stabilität ist die Fertigung von Wickelkörpern mit Wandstärken unterhalb von einem Millimeter kritisch. Daher sind Abstände von einem Millimeter und mehr zwischen Leiterplatte und Sendespule 116 anzustreben.

Bei geeigneter Dimensionierung der Windungszahlen und Windungsradien kann erreicht werden, dass sich die in den beiden Teilspulen 112 bzw. 114 des Detektorsystems induzierten Spannungen gerade gegenseitig aufheben, falls kein metallischer Gegenstand in der Nähe des Detektors vorhanden ist. Diese Kompensation gelingt jedoch nur für eine vorgegebene, wohldefinierte Position der Sendespule 116. Ändert sich die Position der Sendespule 116 relativ zur vorausberechneten Position, beispielsweise durch Toleranzen bei der Spulenfertigung oder bei der mechanischen Sensormontage, so wird in den Empfangsspulen 112 bzw. 114 eine resultierende Fehlerspannung U_{F} induziert.

Erfindungsgemäß sind in der beanspruchten Detektorvorrichtung Schaltmittel vorgesehen, beispielsweise in Form von Halbleiterschaltern, die eine bzw. mehrere elektrische Verbindungen zwischen einzelnen Abschnitten der Windungen der unterschiedlichen Empfängerspulen ermöglichen. Auf diese Weise ist es möglich, die effektiven Windungszahlen der Empfangsspulen auch noch nachträglich, d.h. nach Ausbildung und Einbau der Spulen zu verändern und somit an die aktuelle Lage der Sendespule anzupassen.

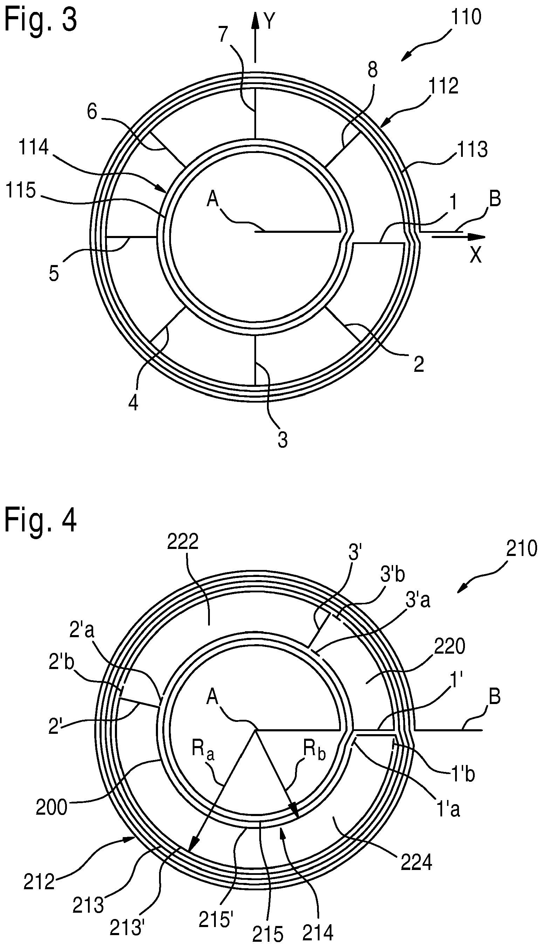

Die stark vereinfachte Darstellung der Figur 3 dient zur Verdeutlichung des Funktionsprinzips des erfindungsgemäßen Detektors. Figur 3 zeigt in einer schematischen Weise die prinzipielle Anordnung der Empfangsspulen mit den zugehörigen Schaltmitteln in einer Aufsicht auf die X-Y-Ebene entsprechend Figur 2. Die Sendespule 116, die in einem gewissen Anstand z₀ über der X-Y-Ebene angeordnet ist, ist somit in Figur 3 nicht dargestellt.

Die beiden Empfangsspulen 112 bzw. 114 sind in der X-Y-Ebene 126 angeordnet. Zwischen den beiden externen Anschlüssen A und B der beiden Empfangsspulen 112 bzw. 114 wird die Detektionsspannung abgegriffen, welche in den Auswerteschaltungen eines dem Detektor zugeordneten Messgeräts weiterverarbeitet wird. Die in Fig. 3 dargestellten, inneren Windungen 115 der Empfangsspule 114 können an verschiedenen Stellen (1 bis 8) mit den äußeren Windungen 113 der Empfängerspule 112 elektrisch verbunden werden.

Sind die planaren Windungen 113 bzw. 115 der Empfängerspulen 112 bzw. 114 beispielsweise als Kupferstrukturen auf einer Leiterplatte ausgebildet, so kann diese Kontaktierung durch geeignete Lötbrücken erfolgen, deren Position frei gewählt werden kann. Die Radien und Windungszahlen des Leiterschleifensystems der Empfangsspule 112 bzw. der Empfangsspule 114 können beispielsweise so dimensioniert werden, dass sich bei einer gegebenen idealen Sendespulengeometrie bei Platzierung einer Lötbrücke an Position 5 der in Fig. 3 gezeigten Spulenanordnung, bei Abwesenheit metallischer Objekte, zwischen den Punkten A und B keinerlei Spannung abgreifen lässt.

Erfolgt die Kontaktierung jedoch beispielsweise an der Stelle 1, so ergeben sich zwischen den Punkten A und B in Summe drei vollständige Windungen mit kleinem Radius im Uhrzeigersinn (Empfangswindungen 115) und vier vollständige Windungen mit großem Radius entgegen dem Uhrzeigersinn (Empfangswindungen 113). Erfolgt die Kontaktierung durch eine leitende Verbindung an Position 5, so erhält man effektiv 2,5 Windungen im Uhrzeigersinn und 3,5 Windungen entgegen dem Uhrzeigersinn.

Da die Spannungen, welche in den Windungen 113 der Empfängerspule 112 induziert werden, eine andere Amplitude und entgegengesetztes Vorzeichen zu den in der Leiterschleife der Empfängerspule 114 induzierten Spannungen haben, ändert sich je nach Position der Leiterbrücke die Spannung, welche zwischen den Punkten A und B abgegriffen werden kann. Durch Variation der Position der Lötbrücken kann somit ein Feinabgleich der Kompensationsanordnung der aus drei Spulen bestehenden Detektorvorrichtung erfolgen.

Insbesondere wird die effektive Windungszahl der beiden gegensinnig orientierten, bzw. bestromten Spulen für die Empfängeranordnung variiert und den jeweiligen Erfordernissen angepasst. So kann durch den nachträglichen Abgleichprozess eine Fehlpositionierung der Sendespule 116, die in Figur 3 aus beschriebenen Gründen nicht dargestellt ist, und eine damit einhergehende Fehlerspannung U_{F} des induktiven Sensors aufgrund von Fertigungs-toleranzen, beseitigt bzw. kompensiert werden.

So ist es beispielsweise vorstellbar, in der Fertigung des induktiven Detektors, zunächst die Sendespule mit einer vergleichsweise geringen Positions- und Dimensionstoleranz auf die Leiterplatte mit den Empfangsspulen zu bestücken. Im Ergebnis wird sich eine geringfügige Fehlerspannung U_{F} ergeben, wenn eine Lötbrücke oder andere verwendete Schaltmittel an der für sie vorgesehenen idealen Positionen (im Beispiel Position 5) montiert oder verschaltet wird. Die Position der Lötbrücke kann nun beispielsweise solange verschoben werden, bis sich bei Abwesenheit metallischer Objekte zwischen den Punkten A und B der Empfangsspulen keine Spannung mehr messen lässt. Die aufgrund der Fertigungstoleranzen bei Spulenkörpern, Wickelautomat und dergleichen unvermeidbare Fehlkompensation kann so vorteilhafter Weise beseitigt werden.

Selbstverständlich kommen neben festen Lötbrücken auch andere Verbindungen, insbesondere auch andere Schaltmittel in Frage. Lötbrücken sind eine technisch weniger attraktive Lösung, da sie einen mechanisch relativ aufwendigen Abgleichprozess erforderlich machen. Um einen Abgleich der Sensorkompensation ohne zusätzlichen Fertigungsschritt realisieren zu können, ist es möglich, auf der Leiterplatte, auf der die Empfangsspulen ausgebildet sind, auch mehrere Halbleiterbauelemente, beispielsweise Feldeffekttransistoren vorzusehen, welche die Kontaktierung des inneren Spulensystems 114 mit dem äußeren Spulensystem 112 vornehmen. Das Versetzen der Lötbrücken wird hierbei dann ersetzt durch ein Umschalten zwischen den einzelnen Halbleiterschaltern. Die manuell einzulötenden Kontaktbrücken können somit ersetzt werden durch einen Kranz von beispielsweise Transistoren, welche über Steuersignale leitend oder sperrend geschaltet werden können. Ein solcher Abgleich kann werksseitig einmalig nach der Montage des Detektors in einem entsprechendem Messgerät, wie beispielsweise einem handgehaltenen Ortungsgerät zur Detektion von metallischen Gegenständen, erfolgen, so dass ein Anwender nicht gezwungen ist, umständliche Kalibrierungsmessungen vor dem eigentlichen Messvorgang durchzuführen.

Wie exakt der Feinabgleich der Kompensation eines Sensors nach Figur 3 erfolgen kann, wird maßgeblich durch die Anzahl der vorgesehenen Schaltmittel bzw. durch die Anzahl der Verbindungsbrücken (1 ... 8) bestimmt bzw. durch das zugehörige Winkelraster, welches diese Verbindungsbrücken durch ihre Unterteilung der Bogenlängen der Windungen der induktiven Spulen definieren. Die Verbindungen 1 bis 8 bilden im Ausführungsbeispiel der Figur 3 ein gleichmäßiges 45° Raster über dem Umfang der in diesem Ausführungsbeispiel kreisförmigen Spulen. Die Abgleichs- oder Kompensationsspannung hängt linear mit dem Winkel bzw. der Bogenlänge der bestromten Windung zusammen, an dem die Kontaktierung der äußeren 112 mit der inneren Spule 114 erfolgt. Verkleinert man beispielsweise das Winkelraster aus Figur 3 von 45° auf 22.5°, indem man die Anzahl der möglichen Positionen der Schaltbrücken auf 16 verdoppelt, so kann die Kompensationsspannung folglich doppelt so fein einjustiert werden. Prinzipiell lassen sich in einer solchen Anordnung beliebig viele Schaltbrücken einsetzen, deren Anzahl lediglich durch praktische Erwägungen begrenzt ist. Eine derartige Auflösungserhöhung für die erzeugte Kompensations- oder Abgleichspannung bereitet bei Verwendung von Lötbrücken neben der relativ aufwändigen mechanischen Realisierung jedoch keine prinzipiellen Probleme.

Werden als Schaltmittel Halbleiterschalter, wie beispielsweise Transistoren eingesetzt, so sind einer Verfeinerung des Justagerasters der möglichen Kompensationsspannungen durch die Erhöhung der Anzahl der verwendeten Schalter ebenfalls praktische Grenzen gesetzt. Für jeden zusätzlich vorgesehene Kontaktierungswinkel müsste in diesem Fall ein eigenes Bauelement und eine individuelle Steuerleitung vorgesehen werden.

Fig. 4 zeigt ein alternatives Ausführungsbeispiel 210 einer erfindungsgemäßen Sensorgeometrie in Kompensationsanordnung für einen Detektor zur Ortung metallischer Gegenstände. Die in Figur 4 gezeigte Kompensationsanordnung bzw. Abgleichgeometrie, hat den Vorteil, dass im Vergleich zu der in Figur 3 gezeigten Anordnung, eine wesentliche Reduzierung der Anzahl von Schaltmitteln realisiert werden kann.

Bei dem Ausführungsbeispiel eines induktiven Kompensationssensors gemäß Figur 4 wird die Windungszahl der Empfängerspule 212 bzw. 214 ebenfalls durch das Hinzuschalten von vorhandenen Windungen oder Windungszweigen variiert, so dass sich effektive Windungszahlen für die Empfangsspulen ergeben. Die beiden Spulen 212 und 214 sind koaxial zueinander angeordnet und in vorteilhafter Weise ebenfalls als Printspulen auf einer Leiterplatte ausgebildet. Des weiteren gilt für die Ausgestaltung und Anordnung der Spulen 212 und 214 das bzgl. der Spulen 112 und 114 in Zusammenhang mit Figur 3 Gesagte.

Abweichend zu der Ausführungsform nach Figur 3 wurde in der Ausführungsform eines induktiven Kompensationssensors nach Figur 4 im Innenbereich der entgegen dem Uhrzeigersinn gewickelten äußeren Spule 212 eine zusätzliche Windung 213' hinzugefügt, welche im Uhrzeigersinn orientiert ist. D.h. im Innenbereich der Spule 212 wurde eine Zusatzwindung hinzugefügt, welche die gleiche Richtungsorientierung aufweist, wie die innen liegende Empfangsspule 214. Der Radius dieser Zusatzwindung 213' sei mit Rₐ bezeichnet. Dieser Radius ist offensichtlich größer als der Radius der äußersten Windung 215' des inneren Spulensystems 214, der im Folgenden mit R_{b} bezeichnet werden soll. Die in einer Windung mit Radius R_{b} induzierte Spannung ist größer als die Spannung, welche in einer Windung mit Radius Rₐ induziert würde, da der Abstand zwischen der innen liegenden Windung (R_{b}) zur - in Figur 4 nicht gezeigten, höhenversetzten Sendespule 116 geringer ist.

Die Windungen 213' und 215' mit Radien Rₐ und R_{b} bilden zusammen ein Abgleichwindungssystem für den induktiven Detektor, welches die relative Windungszahl der Empfangsspulen des Detektors bestimmt. Die Windung 213' bzw. 215' können wiederum durch Schaltbrücken 1',2',3' bzw. durch - den Schaltbrücken zugeordnete - Schaltelemente 1'a,1'b bzw. 2'a, 2'b bzw. 3'a, 3'b in Leiterelemente unterschiedlicher Bogenlänge, sogenannte Kompensationsmodule (220,222,224), unterteilt werden, so dass sich eine feine Auflösung der Windungszahl im Abgleichswindungs-system und somit eine feine Auflösung der in diesem Abgleichwindungssystem induzierten Kompensationsspannung ergibt. Auf diese Weise kann die Abgleichspannung sehr fein eingestellt werden, so dass sie nahezu ideal mit der benötigten Kompensations-spannung übereinstimmt.

Das Abgleichprinzip der Ausführungsform eines induktiven Kompensationssensors gemäß Figur 4 beruht im Detail darauf, dass das Abgleichwindungssystem für den induktiven Detektor durch eine Verbindungsleitung 200, welche die Spule 212 mit der Spule 214 miteinander kontaktiert, gebildet wird. Die Verbindungsleitung 200 ist dabei als Leiterschleife ausgebildet, welche zu einem gewissen Bruchteil auf Kreissegmenten mit Radius Rₐ geführt wird und auf den verbleibenden Strecken durch Kreissegmente mit Radius R_{b} geb ildet wird. Die Verbindungsleitung 200 besteht somit aus verschiedenen Leitermodulen, die gebildet werden aus einer oder mehreren Schaltbrücken 1', 2', 3' und den durch den Schaltbrücken entstandenen Kompensationsmodulen, d.h. den zwischen diesen Schaltbrücken jeweils stromdurchflossenen Bogenlängen der Windungen 213' und 215'.

Die Verbindungsleitung 200, welche die Spule 212 mit der Spule 214 verbindet, ist zu diesem Zweck im Ausführungsbeispielen gemäß Figur 4 in 3 sogenannte Kompensationsmodule (220,222,224), d.h. 3 Teilsegmente unterschiedlicher Winkel- oder Bogenlänge der Windungen aufgegliedert. Zweckmäßigerweise haben deren einzelne Winkel- bzw. Bogenlängen jeweils einen sich um den Faktor 2 unterscheidenden Betrag (z.B. 206° + 103° + 51° = 360°). Andere Staffelungen der relativen Längen der Kompensationsmodule, d.h. der relativen Winkellbögen der Windungen mit Radius Rₐ oder R_{b}, sind aber ebenso möglich.

Mit Hilfe der Schaltmittelpaare 1'a,1'b bzw. 2'a, 2'b bzw. 3'a, 3'b können die einzelnen wirksamen Kompensationsmodule (220,222,224) ausgewählt werden. Auf diese Weise kann festgelegt werden, ob der Stromfluss innerhalb der Verbindungsleitung 200 auf den einzelnen Winkelsegmenten wahlweise im Innenbereich (R_{b}) oder im Außenbereich (Rₐ) erfolgen soll. Werden z.B. die Schalter 1'a bis 3'a geschlossen und die Schaltelemente 1'b bis 3'b hingegen geöffnet, so wird die Verbindungsleitung 200 effektiv durch eine einzelne Windung mit Radius R_{b} gebildet. Die Leitungssegmente mit Radius Rₐ enden durch die geöffneten Schaltelemente im Nichts und sind daher elektrisch nicht wirksam, da nicht kontaktiert.

Die in der Verbindungsleitung 200 induzierte Spannung ist für diese, oben genannte Konfiguration beispielsweise größer als für einen Zustand, bei dem die Schalter 1'a bis 3'a offen und die Schaltelemente 1'b bis 3'b geschlossen sind und die Verbindung der Spulen ausschließlich auf dem äußeren Radius Rₐ erfolgt.

Durch die Wahl einer geeigneten Kombination von Innen- und Außensegmenten 215' und 213' ist es somit möglich, eine feingliedrige Veränderung der in der Verbindungsleitung 200 in Summe induzierten Spannung vorzunehmen. Die Feinheit der Abstimmung ist dabei durch die Länge des kleinsten Winkelsegments (Kompensationsmoduls) bestimmt, welches durch zwei benachbarte Schaltbrücken 1',2',3' realisierbar ist.

Im direkten Vergleich von Figur 3 mit Figur 4 erkennt man, dass zur Erzielung eines Abgleichwinkels von 45° im Ausführungsbeispiel gemäß Figur 3 acht Schaltelemente (1 ... 8) erforderlich wären, während im Ausführungsbeispiel nach Figur 4 für eine vergleichbare Abgleichauflösung von 51° nur sechs Schalter benötigt werden. Eine minimale Anzahl von Schaltelementen ergibt sich dabei, wenn die Längen der Winkelsegmente auf den Kompensationswindungen sich jeweils um einen Faktor 2 unterscheiden. Dem entspricht eine Kodierung der Längen der Kompensationsmodule mit einem Zahlensystem der Basis 2.

Alternativ sind gute Lösungen auch mit beispielsweise 3 oder 4 unterschiedlichen Radien denkbar, bei denen jeweils 3 oder 4 Schalter pro Winkelsegment erforderlich wären und eine Kodierung des Abgleichzustands in einem Zahlensystem der Basis 3 oder 4 erfolgt. Ebenso denkbar sind Kombinationen der Zustandskodierung, bei denen in den einzelnen Winkelsegmenten unterschiedlich viele alternative Schaltmittel vorgesehen sind.

Die lediglich beispielhaft, d.h. nur in einigen der möglichen Ausführungsformen beschriebene Erfindung, hat den Vorteil, frequenzunabhängig zu arbeiten. Die über geeignete Schaltmittel hinzugefügten Leiterschleifen oder Segmente von Leiterschleifen im Empfangspfad können sehr preisgünstig hergestellt werden, insbesondere wenn hierfür nur Leiterstrukturen auf einer Platine notwendig sind. Ebenso lassen sich die Schaltmittel in einfacher und kostengünstiger Weise als Halbleiterstrukturen auf der gleichen Platine ausbilden, auf der auch die Windungen der Empfangsspulen ausgebildet sind. Im Vergleich zu entsprechenden Abgleichverfahren, welche auf der Erregerseite arbeiten, ist die schaltungstechnische Realisierung auf der Empfangsseite wesentlich einfacher und preisgünstiger, da beispielsweise hochohmige Schaltmittel eingesetzt werden können, da in den Empfangsspulen im Vergleich zu den Erregerspulen nur sehr geringe Ströme fließen.

Der erfindungsgemäße Detektor zur Ortung metallischer Objekte ist nicht auf die in den Figuren dargestellten Ausführungsbeispiele begrenzt.

Insbesondere ist das Empfangswindungssystem des erfindungsgemäßen Detektors nicht auf die Verwendung von zwei Empfangsspulen beschränkt.

Des weiteren ist der Detektor nicht auf die in den Ausführungsbeispielen vorgestellte Art und Anzahl der Schaltmittel zur Variation der effektiven Windungszahl der Empfangsspulen begrenzt. Andere Kodierungen der Längen der Kompensationsmodule sind ebenso möglich.

## Patentansprüche

1. Vorrichtung zur Ortung metallischer Objekte, mit genau einer Sendespule (116) und einem Empfangswindungssystem (112, 114; 212, 214), mit zumindest einer Empfangsspule (112, 114; 212, 214), die induktiv miteinander gekoppelt sind, sowie mit elektrischen Schaltmitteln (1 bis 8, 1'a, 2'a, 3'a; 1'b, 2'b, 3'b), die es ermöglichen, die Windungszahl des Empfangswindungssystems (112, 114; 212, 214) zu variieren, **dadurch gekennzeichet**, dass die Windungszahl des Empfangswindungssystems (112, 114; 212, 214) durch das Zu- oder Abschalten von induktiven Kompensationsmodulen in Form von Leiterschleifen oder Bruchteilen solcher Leiterschleifen variierbar ist, wobei die Schaltmittel (1,...,8;1'a,2'a,3'a, 1'b,2'b,3'b) zwischen Windungen (113,213) einer ersten Empfangsspule (112,212) und Windungen (115,215) einer zweiten Empfangsspule (114,214) angeordnet sind.

2. Vorrichtung nach Anspruch 1, **dadurch gekennzeichnet dass** Schaltbrücken (1',2',3') mit Schaltmitteln (1'a,2'a,3'a,1'b,2'b,3'b) zwischen Empfangsspulenwindungen (213',215') mit unterschiedlichem Radius Rₐ bzw. R_{b} angeordnet sind.

3. Vorrichtung nach Anspruch 1 oder 2, **dadurch gekennzeichnet, dass** die Schaltmittel (1,...,8; 1'a,2'a,3'a,1'b,2'b,3'b) durch Halbleiterbauelemente realisiert sind.

4. Vorrichtung nach Anspruch 1, **dadurch gekennzeichnet, dass** mindestens zwei Empfangsspulen (112,114;212,214) koaxial zueinander angeordnet sind.

5. Vorrichtung nach Anspruch 1, **dadurch gekennzeichnet, dass** mindestens zwei Empfangsspulen (112,114;212,214) in einer Ebene angeordnet sind.

6. Vorrichtung nach Anspruch 1 oder 3, **dadurch gekennzeichnet, dass** mindestens zwei Empfangsspulen (112,114;212,214) als Printspulen, insbesondere auf einer Leiterplatte ausgebildet sind.

7. Vorrichtung nach Anspruch 3 und 6, **dadurch gekennzeichnet, dass** die Schaltmittel (1,...,8; 1'a,2'a,3'a,1'b,2'b,3'b) durch Halbleiterschalter auf einer Leiterplatte realisiert sind.

8. Vorrichtung nach Anspruch 5, **dadurch gekennzeichnet, dass** die Sendespule (116) in einer, zumindest zu einer Empfangsspule parallelen, höhenversetzten Ebene angeordnet ist.

9. Vorrichtung nach Anspruch 6 oder 8, **dadurch gekennzeichet, dass** die Sendespule (116) auf einem Wickelkörper aufgebracht ist, der auf der Leiterplatte befestigt ist.

10. Handgehaltenes Ortungsgerät, mit einer Vorrichtung nach einem oder mehreren der Ansprüche 1 bis 9.

11. Werkzeuggerät, insbesondere ein Bohr- oder Meißelwerkzeug, mit einer Vorrichtung nach einem oder mehreren der Ansprüche 1 bis 9.

12. Verfahren zum Betrieb eines induktiven Sensors (110,210) mit genau einer Sendespule (116) und mit einem Empfangswindungssystem (112, 114; 212, 214), mit zumindest einer Empfangsspule (112, 114; 212, 214), die induktiv miteinander gekoppelt sind, bei der der Abgleich einer in einer Empfangsspule (112,114;212,214) induzierten Spannung U durch Zuschaltung eines Abgleichwindungssystems (113,115;213',215') zu den Windungen (113,115; 213,215) des Empfangswindungssystems (112,114;212,214) erfolgt, wobei dieses Abgleichwindungssystem (113,115;213',215') ein oder mehrere Kompensationsmodule (220,222,224) in Form von Leiterschleifen oder Bruchteilen solcher Leiterschleifen aufweist und die Schaltmittel (1,...,8;1'a,2'a,3'a,1'b,2'b,3'b) zwischen Windungen (113,213) einer ersten Empfangsspule (112,212) und Windungen (115,215) einer zweiten Empfangsspule (114,214) angeordnet sind.

13. Verfahren nach Anspruch 12, bei dem für jedes Kompensationsmodul (220,222,224) zwischen m (m=1 ... N, natürliche Zahl) verschiedenen Alternativkonfigurationen (1'a,2'a,3'a,1'b,2'b,3'b) der elektrischen Kontaktierung umgeschaltet werden kann.

14. Verfahren nach Anspruch 12 oder 13, **dadurch gekennzeichet, dass** das Abgleichwindungssystem (113,115;213',215') zumindest aus n (n=1 ... N) unabhängigen Kampensationsmodulen KMₙ (220,222,224) mit jeweils m(n) (m(n)=1 ... M(n)) unterschiedlichen Konfigurationen besteht, in welchen durch selektives Umschalten zwischen Einzelkonfigurationen m eines Kompensationsmoduls KMₙ (220,222,224) eine Spannungsänderung ΔU_{n,m} mit ΔU_{n,m} = (U(n,m) - U(n,m+1)) im Empfangszweig (212,214) des Sensors (210) induziert wird.

15. Verfahren nach Anspruch 14, **dadurch gekennzeichet, dass** die Kompensationsmodule KMₙ (220,222,224) derart ausgebildet sind, dass die Spannungsänderung ΔU_{n,m} sich jeweils um den Faktor M(n-1) von der Spannungs-differenz ΔU_{n-1,m} mit ΔU_{n-1,m}=(U(n-1,m)-U(n-1,m+1)) des Kompensationsmoduls KMₙ₋₁ mit einer um eins geringerer Ordnungszahl n unterscheidet.

16. Verfahren nach Anspruch 14 oder 15, **dadurch gekennzeichet, dass** für die Kompensationsmodule KMₙ (220,222,224) des Abgleichwindungssystems (113,115; 213',215') eine Binärkodierung mit M(n) = 2 verwendet wird, so dass die Beziehung ΔU = (U(n,1) - U(n,2)) = 2*(U(n-1,1) - U(n-1,2)) gilt.

## Claims

1. Device for locating metallic objects, comprising exactly one transmitting coil (116) and a receiving turns system (112, 114; 212, 214), comprising at least one receiving coil (112, 114; 212, 214), which are inductively coupled to one another, and comprising electrical switching means (1 to 8, 1'a, 2'a, 3'a; 1'b, 2'b, 3'b), which make it possible to vary the number of turns of the receiving turns system (112, 114; 212, 214), **characterized in that** the number of turns of the receiving turns system (112, 114; 212, 214) is variable by connecting up or disconnecting inductive compensation modules in the form of conductor loops or fractions of such conductor loops, wherein the switching means (1, ..., 8; 1'a, 2'a, 3'a, 1'b, 2'b, 3'b) are arranged between turns (113, 213) of a first receiving coil (112, 212) and turns (115, 215) of a second receiving coil (114, 214).

2. Device according to Claim 1, **characterized in that** switching bridges (1', 2', 3') with switching means (1'a, 2'a, 3'a, 1'b, 2'b, 3'b) are arranged between receiving coil turns (213', 215') having a different radius Rₐ and R_{b}, respectively.

3. Device according to Claim 1 or 2, **characterized in that** the switching means (1, ..., 8; 1'a, 2'a, 3'a, 1'b, 2'b, 3'b) are realized by semiconductor components.

4. Device according to Claim 1, **characterized in that** at least two receiving coils (112, 114; 212, 214) are arranged coaxially with respect to one another.

5. Device according to Claim 1, **characterized in that** at least two receiving coils (112, 114; 212, 214) are arranged in one plane.

6. Device according to Claim 1 or 3, **characterized in that** at least two receiving coils (112, 114; 212, 214) are embodied as printed circuit board coils, in particular on a printed circuit board.

7. Device according to Claims 3 and 6, **characterized in that** the switching means (1, ..., 8; 1'a, 2'a, 3'a, 1'b, 2'b, 3'b) are realized by semiconductor switches on a printed circuit board.

8. Device according to Claim 5, **characterized in that** the transmitting coil (116) is arranged in a height-offset plane, parallel at least to a receiving coil.

9. Device according to Claim 6 or 8, **characterized in that** the transmitting coil (116) is applied on a coil former fixed on the printed circuit board.

10. Handheld locating apparatus, comprising a device according to one or more of Claims 1 to 9.

11. Tool apparatus, in particular a drilling or chiselling tool, comprising a device according to one or more of Claims 1 to 9.

12. Method for operating an inductive sensor (110, 210) comprising exactly one transmitting coil (116) and comprising a receiving turns system (112, 114; 212, 214), comprising at least one receiving coil (112, 114; 212, 214), which are inductively coupled to one another, in which the adjustment of a voltage U induced in a receiving coil (112, 114; 212, 214) is effected by connecting up an adjustment turns system (113, 115; 213', 215') to the turns (113, 115; 213, 215) of the receiving turns system (112, 114; 212, 214), wherein said adjustment turns system (113, 115; 213', 215') comprises one or a plurality of compensation modules (220, 222, 224) in the form of conductor loops or fractions of such conductor loops and the switching means (1, ..., 8; 1'a, 2'a, 3'a, 1'b, 2'b, 3'b) are arranged between turns (113, 213) of a first receiving coil (112, 212) and turns (115, 215) of a second receiving coil (114, 214).

13. Method according to Claim 12, wherein for each compensation module (220, 222, 224) it is possible to switch over between m (m = 1 ... N, natural number) different alternative configurations (1'a, 2'a, 3'a, 1'b, 2'b, 3'b) of the electrical contacting.

14. Method according to Claim 12 or 13, **characterized in that** the adjustment turns system (113, 115; 213', 215') consists at least of n (n = 1 ... N) independent compensation modules KMₙ (220, 222, 224) having in each case m (n) (m(n) = 1 ... M(n)) different configurations in which, by selectively switching over between individual configurations m of a compensation module KMₙ (220, 222, 224), a voltage change ΔU_{n,m} where ΔU_{n,m} = (U(n,m)-U(n,m+1)) is induced in the receiving branch (212, 214) of the sensor (210).

15. Method according to Claim 14, **characterized in that** the compensation modules KMₙ (220, 222, 224) are designed in such a way that the voltage change ΔU_{n,m} differs in each case by the factor M(n-1) from the voltage difference ΔU_{n-1,m} where ΔU_{n-1,m} = (U(n-1,m) - U(n-1,m+1)) of the compensation module KMₙ₋₁ having an ordinal number n lower by one.

16. Method according to Claim 14 or 15, **characterized in that** a binary coding where M(n) = 2 is used for the compensation modules KMₙ (220, 222, 224) of the adjustment turns system (113, 115; 213', 215'), such that the relationship ΔU = (U(n,1)-U(n,2)) = 2*(U(n-1,1)-U(n-1,2)) holds true.

## Revendications

1. Dispositif de localisation d'objets métalliques, comportant exactement une bobine émettrice (116) et un système d'enroulements de réception (112, 114 ; 212, 214) ayant au moins une bobine de réception (112, 114 ; 212, 214), qui sont couplés l'un à l'autre par induction, ainsi que des moyens de commutation (1 à 8, 1'a, 2'a, 3'a ; 1'b, 2'b, 3'b) permettant de faire varier le nombre d'enroulements du système d'enroulements de réception (112, 114 ; 212, 214), **caractérisé en ce que** le nombre d'enroulements du système d'enroulements de réception (112, 114 ; 212, 214) peut être amené à varier en connectant ou déconnectant des modules de compensation à induction sous la forme de boucles conductrices ou de fractions de ces boucles conductrices, dans lequel les moyens de commutation (1 ... 8, 1'a, 2'a, 3'a ; 1'b, 2'b, 3'b) sont disposés entre des enroulements (113, 213) d'une première bobine de réception (112, 212) et des enroulements (115, 215) d'une seconde bobine de réception (114, 214).

2. Dispositif selon la revendication 1, **caractérisé en ce que** des ponts de commutation (1', 2', 3') comportant des moyens de commutation (1'a, 2'a, 3'a, 1'b, 2'b, 3'b) sont disposés entre des enroulements de bobines de réception (213', 215') ayant des rayons Rₐ ou R_{b} différents.

3. Dispositif selon la revendication 1 ou 2, **caractérisé en ce que** les moyens de commutation (1, ...,8 ; 1'a, 2'a, 3'a, 1'b, 2'b, 3'b) sont réalisés par des composants semi-conducteurs.

4. Dispositif selon la revendication 1, **caractérisé en ce qu'**au moins deux bobines de réception (112, 114 ; 212, 214) sont disposées coaxialement l'une par rapport à l'autre.

5. Dispositif selon la revendication 1, **caractérisé en ce qu'**au moins deux bobines de réception (112, 114 ; 212, 214) sont disposées dans un plan.

6. Dispositif selon la revendication 1 ou 3, **caractérisé en ce qu'**au moins deux bobines de réception (112, 114 ; 212, 214) sont réalisées sous la forme de bobines d'impression, en particulier sur une carte de circuit imprimé.

7. Dispositif selon les revendications 3 et 6, **caractérisé en ce que** les moyens de commutation (1, ...,8 ; 1'a, 2'a, 3'a, 1'b, 2'b, 3'b) sont réalisés par des commutateurs à semi-conducteurs sur une carte de circuit imprimé.

8. Dispositif selon la revendication 5, **caractérisé en ce que** la bobine d'émission (116) est disposée dans un plan décalé en hauteur, au moins parallèlement à une bobine de réception.

9. Dispositif selon la revendication 6 ou 8, **caractérisé en ce que** la bobine d'émission (116) est montée sur un corps d'enroulement qui est fixé à la carte de circuit imprimé.

10. Appareil de localisation portatif, comportant un dispositif selon l'une ou plusieurs des revendications 1 à 9.

11. Outil, en particulier outil de perçage ou de burinage, comportant un dispositif selon l'une quelconque des revendications 1 à 9.

12. Procédé de mise en fonctionnement d'une capteur à induction (110, 210) comportant exactement une bobine d'émission (116) et un système d'enroulements de réception (112, 114 ; 212, 214) ayant au moins une bobine de réception (112, 114 ; 212, 214), qui sont couplés l'un à l'autre par induction, dans lequel l'ajustement d'une tension U induite dans une bobine de réception (112, 114 ; 212, 214) est effectué par connexion d'un système d'enroulements d'ajustement (113, 115 ; 213', 215') aux enroulements (113, 115 ; 213, 215) du système d'enroulements de réception (112, 114 ; 212, 214), dans lequel ledit système d'enroulements d'ajustement (113, 115 ; 213', 215') comporte un ou plusieurs modules de compensation (220, 222, 224) sous la forme de boucles conductrices ou de fractions de ces boucles conductrices et les moyens de commutation (1, ...,8 ; 1'a, 2'a, 3'a, 1'b, 2'b, 3'b) sont disposés entre des enroulements (113, 213) d'une première bobine de réception (112, 212) et des enroulements (115, 215) d'une seconde bobine de réception (114, 214).

13. Procédé selon la revendication 12, dans lequel, pour chaque module de compensation (220, 222, 224), il est possible de basculer entre m (m = 1 ... N, entier naturel) configurations alternatives différentes (1'a, 2'a, 3'a, 1'b, 2'b, 3'b) des contacts électriques.

14. Procédé selon la revendication 12 ou 13, **caractérisé en ce que** le système d'enroulements d'ajustement (113, 115 ; 213', 215') est constitué d'au moins n (n = 1 ... N) modules de compensation indépendants KMₙ (220, 222, 224) ayant chacun m(n) (m(n) = 1 ... M(n)) configurations différentes, modules dans lesquels une modification de tension ΔU_{n,m}, avec ΔU_{n,m} = (U(n, m) - U(n, m+1)), est induite dans la branche de réception (212, 214) du capteur (210) par basculement sélectif entre des configurations individuelles m d'un module de compensation KMₙ (220, 222, 224).

15. Procédé selon la revendication 14, **caractérisé en ce que** les modules de compensation KMₙ (220, 222, 224) sont réalisés de manière à ce que la modification de tension ΔU_{n,m} soit chaque fois différente d'un facteur M(n-1) de la différence de tension ΔU_{n-1,m}, avec ΔU_{n-1,m} = (U(n-1, m) - U(n-1, m+1)), du module de compensation KMₙ₋₁ ayant un rang n est inférieur de 1.

16. Procédé selon la revendication 14 ou 15, **caractérisé en ce que**, pour les modules de compensation KMₙ (220, 222, 224) du système d'enroulements de compensation (113, 115 ; 213', 215'), on utilise un codage binaire avec M(n) = 2, de manière à ce que la relation ΔU = (U(n,1) - U(n,2)) = 2*(U(n-1,1) - U(n-1,2)) soit vérifiée.
